# EUROPEAN PATENT APPLICATION

(11) **EP 4 617 208 A1**
(43) Date of publication of application: **17.09.2025**
(21) Application number: 24892472.2
(22) Date of filing: 13.08.2024
(51) Int. Cl.: B65G 47/91, B65G 47/74, B65G 47/22, H01M 6/00

(54) **DEVICE FOR FEEDING ADAPTER PIECE, BATTERY PRODUCTION LINE, AND METHOD FOR FEEDING ADAPTER PIECE**

(30) Priority: 02.02.2024 CN 202410146856
(71) Applicant: Contemporary Amperex Technology Co., Limited, Jiaocheng District Ningde Fujian 352100 (CN)
(72) Inventor: WANG, Tengteng, Ningde Fujian 352100 (CN); YANG, Kun, Ningde Fujian 352100 (CN); FAN, Xiang, Ningde Fujian 352100 (CN)
(74) Representative: Herrmann, Uwe
(86) International application number: PCT/CN2024/111723
(87) International publication number: WO 2025/161340

(57) **Abstract**

An equipment for loading adapters, a battery production line, and a method for loading adapters are provided, pertaining to the technical field of battery production. The equipment for loading adapters includes a frame, a gripping assembly, a positioning disc, and a transfer apparatus. The frame has multiple workstations, where a container at one or more of the workstations carries an adapter for a positive electrode, and a container at one or more of the workstations carries an adapter for a negative electrode. The gripping assembly is arranged on the frame. The positioning disc is arranged on the frame, where the positioning disc has multiple positioning slots, a pair of two positioning slots respectively position the adapter for the positive electrode and the adapter for the negative electrode, and the gripping assembly is configured to grip an adapter carried by the container at the workstation and move the adapter to a corresponding positioning slot, so that a position of the adapter for the positive electrode relative to the adapter for the negative electrode meets loading requirements. The transfer apparatus is arranged on the frame, and the transfer apparatus is used to pick up the adapters in the positioning slots together and load them to a welding assembly.

## Description

### CROSS-REFERENCE TO RELATED APPLICATIONS

This application claims priority to Chinese Patent Application No. 202410146856.3, filed on February 2, 2024 and entitled "EQUIPMENT FOR LOADING ADAPTERS, BATTERY PRODUCTION LINE, AND A METHOD FOR LOADING ADAPTERS", which is incorporated herein by reference in its entirety.

### TECHNICAL FIELD

This disclosure relates to the technical field of battery production, specifically to an equipment for loading adapters, a battery production line, and a method for loading adapters.

### BACKGROUND

During the production process of batteries, adapters need to be welded to the tabs of bare cells, and the welding quality of the adapters and tabs affects the quality of the finished batteries.

In the related technology, the yield of finished batteries is relatively low.

### SUMMARY

In view of this, embodiments of this disclosure aim to provide an equipment for loading adapters, a battery production line, and a method for loading adapters to improve the yield of finished batteries.

To achieve the above objectives, the technical solutions of the embodiments of this disclosure are implemented as follows:

Embodiments of this disclosure provide an equipment for loading adapters, including:
a frame having multiple workstations, where a container at one or more of the workstations carries an adapter for a positive electrode, and a container at one or more of the workstations carries an adapter for a negative electrode;
a gripping assembly arranged on the frame;
a positioning disc arranged on the frame, where the positioning disc has multiple positioning slots, and among the multiple positioning slots, a pair of two positioning slots respectively position the adapter for the positive electrode and the adapter for the negative electrode, and the gripping assembly is configured to grip an adapter carried by the container at the workstation and move the adapter to a corresponding positioning slot, so that a position of the adapter for the positive electrode relative to the adapter for the negative electrode meets loading requirements; and
a transfer apparatus arranged on the frame, where the transfer apparatus is configured to pick up the adapter for the positive electrode in the positioning slot and the adapter for the negative electrode in the corresponding positioning slot together and load the adapters to a welding assembly.

The equipment further includes a first transverse movement apparatus, a first lifting apparatus, and a collection assembly, the collection assembly is configured to collect the containers, the first transverse movement apparatus is capable of moving back and forth below the workstation and below the collection assembly, and the first lifting apparatus is configured to lift the container located below the collection assembly upward, so that the container is placed on the collection assembly.

In the embodiments of this disclosure, the equipment is provided with a positioning disc, the gripping assembly is capable of moving the adapter for the positive electrode and the adapter for the negative electrode carried by the containers at the workstation to the positioning disc, the positioning slots of the positioning disc can position the adapters, and the transfer apparatus can move the positioned adapter for the positive electrode and adapter for the negative electrode to the corresponding positions. Before the loading of the adapters, the positions of the adapters are positioned so that the position of the adapter for the positive electrode relative to the adapter for the negative electrode meets the loading requirements, and after the adapters are loaded and welded to the tabs of the bare cells, the welding marks can be accurately located at the preset positions. This ensures that the battery cells formed after welding are structurally stable and the current flows smoothly, thereby improving the yield of finished batteries. Furthermore, the equipment further includes a first transverse movement apparatus, a first lifting apparatus, and a collection assembly. The first transverse movement apparatus can move the target container or the empty container at the workstation to a position below the collection assembly, and the first lifting apparatus can then place the container on the collection assembly, thereby allowing containers that have not been inspected to be placed at the workstation. The process of replacing containers is automated, reducing manual intervention and making the loading process smoother.

In an embodiment, a side surface of the positioning slot slopes downward from top to bottom toward a central axis of the positioning slot.

In the embodiments of this disclosure, the side surface of the positioning slot slopes downward from top to bottom toward a central axis of the positioning slot. The side surface of the positioning slot can guide the adapter to move to the bottom surface of the positioning slot, with a simple guiding method and low costs.

In an embodiment, the frame has a loading station, the loading station is configured for loading the containers, and the equipment further includes a moving assembly, the moving assembly being arranged on the frame, where the moving assembly is configured to move the container carrying the adapter from the loading station to the workstation.

In the embodiments of this disclosure, the moving assembly can move the container at the loading station to the workstation. The process of moving the container to the workstation is more automated, making the loading process smooth. Moreover, avoiding manual handling of containers can ensure that the containers are placed more accurately at the workstation.

In an embodiment, the moving assembly includes a second transverse movement apparatus, a second lifting apparatus, and a positioning apparatus, the second transverse movement apparatus and the second lifting apparatus are located below the frame, the second transverse movement apparatus is configured to drive the container to move from the loading station along an extension direction of the second transverse movement apparatus toward the workstation, the second lifting apparatus is configured to drive the container to move closer to the workstation in a vertical direction, the positioning apparatus is arranged on the frame, and the positioning apparatus is configured to position the container at the workstation.

In the embodiments of this disclosure, the moving assembly includes a second transverse movement apparatus, a second lifting apparatus, and a positioning apparatus. The positioning apparatus can accurately position the container at the workstation, alleviating issues of defective adapters caused by deviations in the container's position.

In an embodiment, the equipment further includes an image acquisition assembly arranged on the frame, where the image acquisition assembly is configured to capture the adapter carried by the container at the workstation and send the captured image to a host computer, so that the host computer may inspect the image sent by the image acquisition assembly.

In the embodiments of this disclosure, the equipment is provided with an image acquisition assembly to capture an image of the adapter carried by the container at the workstation and send the image to a host computer, and the host computer inspects the adapter. By inspecting the adapters using the image acquisition assembly, defective adapters can be removed from the production line, thereby further improving the qualification rate of finished batteries.

This disclosure also provides a battery production line, including:
any of the aforementioned equipment; and
a welding assembly configured to receive the adapters gripped by the transfer apparatus.

Embodiments of this disclosure provide a method for loading adapters, including:
moving, by a gripping assembly on a frame, an adapter with a qualified inspection result from a container to a corresponding positioning slot on a positioning disc on the frame, to position an adapter for a positive electrode and a corresponding adapter for a negative electrode;
loading, after the positioning, by a transfer apparatus on the frame, the adapter for the positive electrode in the positioning slot and the adapter for the negative electrode in the corresponding positioning slot together to a welding assembly; and removing, by a first transverse movement apparatus, a first lifting apparatus, and a collection assembly, the container at a workstation from the workstation. The method further includes a removal step, and the removal step includes:
driving, by the first transverse movement apparatus, the container to move from the workstation to a position below the collection assembly; and
lifting, by the first lifting apparatus, the container located below the collection assembly upward, so that the container is placed on the collection assembly.

In the embodiments of this disclosure, when the inspection result of the adapter is qualified, the gripping assembly moves the qualified adapter from the container to the positioning disc for positioning. The positioning slots in the positioning disc can position the adapter for the positive electrode and the adapter for the negative electrode, ensuring that the position of the adapter for the positive electrode relative to the adapter for the negative electrode meets the loading requirements. After the adapters are loaded and welded to the tabs of the bare cells, the welding marks can be accurately located at the preset positions. This ensures that the battery cells formed after welding are structurally stable and the current flows smoothly, thereby improving the yield of finished batteries.

In an embodiment, the adapters are imaged by an image acquisition assembly, and defective adapters are collected by a recovery apparatus; and the method further includes:
capturing, by the image acquisition assembly on the frame, an image of the adapter carried in the container at the workstation on the frame and sending the captured image to a host computer;
sending, by a controller, a type of the adapter in the container corresponding to the image captured by the image acquisition assembly to the host computer;
inspecting, by the host computer, the image sent by the image acquisition assembly based on the type of the adapter in the corresponding container and sending an inspection result to the controller; and
moving, when the controller determines that the inspection result of the adapter is defective, by the gripping assembly, the defective adapter from the container to the recovery apparatus.

In the embodiments of this disclosure, the image acquisition assembly on the frame captures the image of the adapter carried by the container at the workstation and sends the image to the host computer, and the host computer inspects the adapter. The host computer compares the image sent by the image acquisition assembly based on the type of the adapter, and can move the defective adapter to the recovery apparatus, thereby further improving the qualification rate of finished batteries.

In an embodiment, the container has multiple accommodating cavities for carrying adapters; and the method further includes:
skipping, when inspection results of a continuous first preset number of adapters in a same accommodating cavity are all defective, by the image acquisition assembly, to capture images of adapters in another accommodating cavity.

In the embodiments of this disclosure, when the inspection results of multiple continuous adapters in the same accommodating cavity are defective, the image acquisition assembly captures images of the adapters in another accommodating cavity. During the process of placing the adapters in the accommodating cavity, due to human or mechanical issues causing position deviations or mix-ups of the adapters, errors may occur in all adapters in the accommodating cavity. When multiple continuous defective adapters are detected, skipping that accommodating cavity can speed up the loading process and avoid spending too much time inspecting defective adapters.

In an embodiment, an equipment for loading adapters includes a first transverse movement apparatus, a first lifting apparatus, and a collection assembly, and the accommodating cavity corresponding to the continuous first preset number of adapters with defective inspection results is a target cavity; and the method further includes:
performing, when a same container is determined to have a continuous second preset number of target cavities, the removal step, where the container moved from the workstation to the position below the collection assembly under the drive of the first transverse movement apparatus is a target container, and the target container is the container corresponding to the continuous second preset number of target cavities; and
capturing, after the first transverse movement apparatus drives the target container from the workstation to the position below the collection assembly, by the image acquisition assembly, images of adapters in another container at the workstation and sending the captured images to the controller.

In the embodiments of this disclosure, when the same container is determined to have the continuous second preset number of target cavities, the target container is moved out of the workstation and transferred to the collection assembly using the first transverse movement apparatus and the first lifting apparatus. When a container continuously has multiple target cavities, it is possible that an error occurs in placing one of the adapters into the container, causing the subsequent adapters to be placed incorrectly. When multiple continuous target cavities are detected, skipping that container can speed up the loading process and avoid spending too much time inspecting defective adapters.

It is understood that when the same container is determined to have the continuous second preset number of target cavities, the container at the workstation is removed by executing the removal step, and the removed container is the target container.

In an embodiment, the container is moved from a loading station of the frame to the workstation of the frame by a moving assembly. After the first transverse movement apparatus drives the target container from the workstation to the position below the collection assembly, the method further includes:
moving, by the moving assembly, the another container carrying the adapters from the loading station to the workstation.

In the embodiments of this disclosure, when the target container is moved out of the workstation, the moving assembly can move another container to the workstation, allowing the image acquisition assembly to continue capturing images. The automation level of the moving process is high, alleviating the need for manual movement of the container.

In an embodiment, the container corresponding to the continuous second preset number of target cavities in the same container is the target container; and the method further includes:
issuing, when the controller determines that a continuous third preset number of target containers are detected, an alarm signal notification.

In the embodiments of this disclosure, an alarm is triggered when multiple target containers are detected continuously. When multiple target containers are detected continuously, significant faults may occur, requiring an alarm to notify the operators to troubleshoot each stage of the loading process to resolve the issue and continue loading.

In an embodiment, the adapter carried by the container at the workstation is inspected. The host computer inspects, based on the type of the adapter in the corresponding container, the image sent by the image acquisition assembly, and sends the inspection result to the controller, including the following steps:
determining, based on target features of the adapter, whether the inspection result of the adapter is qualified, where the target features include at least one of color, size, shape, and position accuracy, and the host computer determines a preset color of the adapter, a preset position of a foolproof portion of the adapter, and a preset size of the adapter based on the type of the adapter in the corresponding container;
determining, when the host computer determines that the adapter in the image satisfies a first condition, by the host computer, that the inspection result of the adapter in the image is qualified, and sending the qualified inspection result to the controller, where the first condition is that a color of the adapter, a position of the foolproof portion of the adapter, and a size of the adapter in the image match the preset color, the preset position, and the preset size, respectively, and the adapter in the image is located within an accommodating cavity of the corresponding container; and
determining, when the host computer determines that the adapter in the image satisfies a second condition, by the host computer, that the inspection result of the adapter in the image is defective, and sending the defective inspection result to the controller, where the second condition is that any one of the color of the adapter, the position of the foolproof portion of the adapter, and the size of the adapter in the image does not match the corresponding preset color, preset position, or preset size, or the adapter in the image is located outside the accommodating cavity of the corresponding container.

In the embodiments of this disclosure, the color, position of the foolproof portion, and size of the adapter are compared with the preset color, preset position, and preset size respectively, ensuring that the inspected adapters meet the operator's requirements for preset features, thereby increasing the yield of finished batteries.

The equipment provided in the embodiments of this disclosure is equipped with the positioning disc. The gripping assembly can move the adapter for the positive electrode and the adapter for the negative electrode carried by the container at the workstation to the positioning disc. The positioning slots of the positioning disc can position the adapters, and the transfer apparatus can move the positioned adapter for the positive electrode and adapter for the negative electrode to the corresponding positions. Before the loading of the adapters, the positions of the adapters are positioned so that the position of the adapter for the positive electrode relative to the adapter for the negative electrode meets the loading requirements, and after the adapters are loaded and welded to the tabs of the bare cells, the welding marks can be accurately located at the preset positions. This ensures that the battery cells formed after welding are structurally stable and the current flows smoothly, thereby improving the yield of finished batteries.

### BRIEF DESCRIPTION OF THE DRAWINGS

FIG. 1 is a schematic structural diagram of equipment for loading adapters in an embodiment of this disclosure;
FIG. 2 is a partial enlarged view at position A in FIG. 1;
FIG. 3 is a partial enlarged view at position B in FIG. 1;
FIG. 4 is a schematic structural diagram of equipment for loading adapters from another perspective in a first embodiment of this disclosure;
FIG. 5 is a partial enlarged view at position C in FIG. 4;
FIG. 6 is a schematic structural diagram of equipment for loading adapters from another perspective in a second embodiment of this disclosure;
FIG. 7 is a schematic structural diagram of an adapter in an embodiment of this disclosure;
FIG. 8 is a schematic flow diagram of a method for loading adapters in the first embodiment of this disclosure;
FIG. 9 is a schematic flow diagram of a method for loading adapters in a second embodiment of this disclosure;
FIG. 10 is a schematic flow diagram of moving another container carrying adapters from a loading station to a workstation by a moving assembly in an embodiment of this disclosure; and
FIG. 11 is a schematic flow diagram of determining whether an adapter is qualified by a host computer in an embodiment of this disclosure.

Reference signs are described as follows:
1. frame; 1a. first workstation; 1b. loading station; 1c. vertical direction; 1d. second workstation; 2. image acquisition assembly; 3. positioning disc; 3a. positioning slot; 4. transfer apparatus; 5. first transverse movement apparatus; 6. first lifting apparatus; 7. collection assembly; 8. moving assembly; 80. second transverse movement apparatus; 81. positioning apparatus; 82. second lifting apparatus; 9. container; 9a. accommodating cavity; 10. recovery apparatus; 11. gripping assembly; 110. outer frame; 111. spider hand apparatus; 12. adapter; and 12a. foolproof portion.

### DESCRIPTION OF EMBODIMENTS

The following describes in detail the embodiments of technical solutions of this disclosure with reference to the accompanying drawings. The following embodiments are merely intended for a clearer description of the technical solutions of this disclosure and therefore are used as just examples which do not constitute any limitations on the protection scope of this disclosure.

Unless otherwise defined, all technical and scientific terms used herein have the same meaning as those generally understood by one of ordinary skill in the art to which this disclosure belongs. The terminology used herein is for the purpose of describing particular embodiments only and is not intended to limit this disclosure. The terms "include" and "have" and any variations thereof, as used in this disclosure, are intended to cover nonexclusive inclusions.

In the description of embodiments of this disclosure, the technical terms "first," "second," "third," and the like, are only used to distinguish different objects and should not be understood as indicating or implying relative importance or implicitly specifying the quantity, specific order, or primary-secondary relationship of the indicated technical features. In the description of embodiments of this disclosure, "multiple" means two or more, unless otherwise explicitly and specifically defined.

As mentioned herein, "embodiment" means that a specific feature, structure, or characteristic described in connection with the embodiment may be included in at least one embodiment of this disclosure. The appearance of this phrase in various places in the specification does not necessarily refer to the same embodiment, nor is it an independent or alternative embodiment that is mutually exclusive with other embodiments. It is explicitly and implicitly understood by those skilled in the art that the embodiments described herein may be combined with other embodiments.

In the description of embodiments of this disclosure, the term "and/or" is merely a description of the relationship between associated objects, indicating that there may be three types of relationships, for example, A and/or B may mean: A alone, A and B together, or B alone. In addition, the character "/" herein generally indicates that the associated objects before and after it are in an "or" relationship.

In the description of the embodiments of this disclosure, unless otherwise specified and defined explicitly, the terms "mount", "connect", "join", and "fasten" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. For those of ordinary skill in the art, the specific meanings of the above terms in the embodiments of this disclosure can be understood according to specific circumstances.

In the description of embodiments of this disclosure, unless otherwise explicitly defined and limited, the technical term "contact" should be understood broadly, it may be direct contact or contact through an intermediate medium layer, it may be contact between two objects with essentially no interaction force, or contact between two objects with interaction force.

As part of the inventive concept of this disclosure, before description of the embodiments of this disclosure, it is necessary to analyze the reasons for the low yield of finished batteries in the related technology, and through reasonable analysis, the technical solutions of the embodiments of this disclosure are obtained.

In the related technology, during the processing of the battery cell, an adapter is needed to connect the tabs of paired bare cells. Before the adapter is welded to the tabs, there may be a deviation in the relative position between the adapter and the tabs. Welding with a deviation in the relative position results in the position of the adapter in the finished battery being significantly different from the preset position, leading to a low yield of finished batteries.

A positioning disc 3 of the equipment for loading adapters 12 in this disclosure has multiple positioning slots 3a, and the positioning slots 3a respectively position the adapter 12 for the positive electrode and the adapter 12 for the negative electrode. Loading the adapters 12 after positioning allows for more precise welding of the adapters 12 to the tabs, thereby increasing the yield of finished batteries.

An equipment for loading adapters according to an embodiment of this application is mainly used for loading adapters 12 of a battery cell, so that the adapters 12 can be loaded to the position for welding with the bare cell.

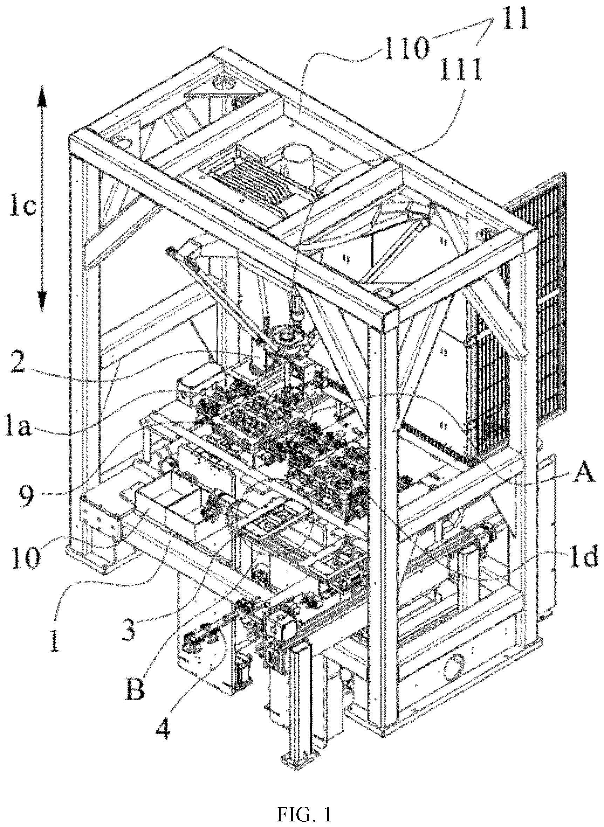

According to a first aspect, an embodiment of this disclosure provides an equipment for loading adapters 12. Referring to FIGs. 1 to 6, the equipment for loading adapters 12 includes a frame 1, a gripping assembly 11, a positioning disc 3, and a transfer apparatus 4. The frame 1 has multiple workstations, where a container 9 at one or more of the workstations carries an adapter 12 for a positive electrode, and a container 9 at one or more of the workstations carries an adapter 12 for a negative electrode. The gripping assembly 11 is arranged on the frame 1. The positioning disc 3 is arranged on the frame 1, where the positioning disc 3 has multiple positioning slots 3a, and among the multiple positioning slots 3a, a pair of two positioning slots 3a respectively position the adapter 12 for the positive electrode and the adapter 12 for the negative electrode, and the gripping assembly 11 is configured to grip an adapter 12 carried by the container 9 at the workstation and move the adapter to a corresponding positioning slot 3a, so that a position of the adapter 12 for the positive electrode relative to the adapter 12 for the negative electrode meets loading requirements. The transfer apparatus 4 is arranged on the frame 1, where the transfer apparatus 4 is configured to pick up the adapter 12 for the positive electrode in the positioning slot 3a and the adapter 12 for the negative electrode in the corresponding positioning slot 3a together and load the adapters to a welding assembly.

The battery cell may be a secondary battery, and the secondary battery refers to a battery cell that can continue to be used by activating the active material through charging after the battery cell is discharged.

The battery cell may be a lithium-ion battery, sodium-ion battery, sodium-lithium-ion battery, lithium-metal battery, sodium-metal battery, lithium-sulfur battery, magnesium-ion battery, nickel-hydrogen battery, nickel-cadmium battery, lead-acid battery, or the like, and the embodiments of this application are not limited to this.

The battery cell includes a casing, a bare cell, conductive terminals, and adapters 12, the bare cell is located inside the casing, the conductive terminals are installed on the casing, and the adapters 12 are respectively connected to the conductive terminals and the bare cell to enable electrical conduction between the conductive terminals and the bare cell.

The bare cell includes a positive electrode, a negative electrode, and a separator, the separator being arranged between the positive electrode and the negative electrode. During the charge and discharge process of the battery cell, active ions (for example, lithium ions) are intercalated and deintercalated between the positive electrode and the negative electrode. The separator is arranged between the positive electrode and the negative electrode, which may prevent short circuits between the positive and negative electrodes, and at the same time, allow active ions to pass through.

For example, the positive electrode may be a positive electrode sheet, and the positive electrode sheet may include a positive electrode current collector and a positive electrode active material arranged on at least one surface of the positive electrode current collector.

For example, the positive electrode current collector has two opposite surfaces in its own thickness direction, and the positive electrode active material is arranged on either one or both of the opposite surfaces of the positive electrode current collector.

For example, the positive electrode current collector may be a metal foil, conductive polymer material, carbon material, or composite current collector. For example, as a metal foil, it may be pure metal, alloy, surface-treated metal, including but not limited to stainless steel, copper, aluminum, nickel, nickel, titanium, or silver. The composite current collector may include a polymer material base layer and a metal layer. The composite current collector may be formed by forming a metal material (aluminum, aluminum alloy, nickel, nickel alloy, titanium, titanium alloy, silver, and silver alloy) on a polymer material substrate (such as polypropylene, polyethylene terephthalate, polybutylene terephthalate, polystyrene, or polyethylene).

For example, the positive electrode active material may include at least one of the following materials: lithium phosphate, lithium transition metal oxides, and their respective modified compounds. However, this application is not limited to such materials, and may alternatively use other conventional materials that can be used as positive electrode active materials for batteries. One of these positive electrode active materials may be used alone, or two or more of them may be used in combination. Examples of the phosphate may include but are not limited to at least one of lithium iron phosphate (for example, LiFePO4 (LFP for short)), a composite material of lithium iron phosphate and carbon, lithium manganese phosphate (for example, LiMnPO4), composite materials of lithium manganese phosphate and carbon, lithium manganese iron phosphate, and composite materials of lithium manganese iron phosphate and carbon. Examples of the lithium transition metal oxides may include but are not limited to at least one of lithium cobalt oxide (for example, LiCoO2), lithium nickel oxide (for example, LiNiO2), lithium manganese oxide (for example, LiMnO2 and LiMn2O4), lithium nickel cobalt oxide, lithium manganese cobalt oxide, lithium nickel manganese oxide, lithium nickel cobalt manganese oxide (for example, LiNi1/3Co1/3Mn1/3O2 (NCM333 for short), LiNi0.5Co0.2Mn0.3O2 (NCM523 for short), LiNi0.5Co0.25Mn0.25O2 (NCM211 for short), LiNi0.6Co0.2Mn0.2O2 (NCM622 for short), and LiNi0.8Co0.1Mn0.1O2 (NCM811 for short)), and lithium nickel aluminum cobalt oxide (for example, LiNi0.8Co0.15Al0.05O2), and modified compounds thereof. Modified compounds refer to substances obtained by modification methods such as doping or coating based on the above substances.

For example, the negative electrode may be a negative electrode sheet, and the negative electrode sheet may include a negative electrode current collector.

For example, the negative electrode current collector may be a metal foil, conductive polymer material, carbon material, or composite current collector. For example, as a metal foil, it may be pure metal, alloy, surface-treated metal, including but not limited to stainless steel, copper, aluminum, nickel, nickel, titanium, or silver. The composite current collector may include a polymer material base layer and a metal layer. The composite current collector may be formed by forming a metal material (copper, copper alloy, nickel, nickel alloy, titanium, titanium alloy, silver, silver alloy, or the like) on a polymer material substrate (matrices such as polypropylene, polyethylene terephthalate, polybutylene terephthalate, polystyrene, or polyethylene.

For example, the negative electrode sheet may include a negative electrode current collector and a negative electrode active material arranged on at least one surface of the negative electrode current collector.

For example, the negative electrode current collector has two opposite surfaces in its own thickness direction, and the negative electrode active material is arranged on either one or both of the opposite surfaces of the negative electrode current collector.

For example, the negative electrode active material may be a negative electrode active material for battery cells known in the art. For example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon oxides, silicon-carbon composites, silicon-nitrogen composites, and silicon alloys. The tin-based material may be selected from at least one of elemental tin, tin oxides, and tin alloys. However, this application is not limited to these materials, and other conventional materials that may be used as negative electrode active materials for battery cells may also be used. One of these negative electrode active materials may be used alone, or two or more of them may be used in combination.

For example, the separator is a separating film. The separating film is not limited to any particular type in this application, and may be any well-known porous separator with good chemical stability and mechanical stability.

For example, the main material of the separating film may be selected from at least one of glass fiber, non-woven fabric, polyethylene, polypropylene, polyvinylidene fluoride, or ceramics. The separating film may be a single-layer film or a multi-layer composite film and is not particularly limited. When the separator is a multi-layer composite film, all layers may be made of the same or different materials, which is not particularly limited. The separator may be a separate component located between the positive and negative electrodes, or it may be attached to the surface of the positive and negative electrodes. The surface of the separating film may also be coated with an inorganic particle coating, an organic particle coating, or an organic/inorganic composite coating.

In some embodiments, the separator is a solid electrolyte. The solid electrolyte is arranged between the positive electrode and negative electrode, serving both to transmit ions and to separate the positive and negative electrodes.

For example, the casing of the battery cell may be a steel casing, aluminum casing, plastic casing (such as polypropylene), composite metal casing (such as copper-aluminum composite casing), or aluminum-plastic film. In some embodiments, the casing may be a sealed structure or a non-sealed structure. For example, when the casing is a non-sealed structure, the casing serves to protect the bare cell, and a sealing bag is included between the casing and the bare cell, which is used to encapsulate the bare cell and electrolyte. Specifically, the sealing bag may be a bag-shaped insulating piece or aluminum-plastic film. When the casing is a sealed structure, it is used to encapsulate components such as the bare cell and electrolyte.

For example, the battery cell may be a cylindrical battery cell, prismatic battery cell, pouch battery cell, or other shaped battery cells. The prismatic battery cell includes square battery cells, blade-shaped battery cells, multi-prismatic batteries, such as hexagonal prismatic batteries, and this application is not particularly limited.

For example, the casing includes an end cover and a shell, where the shell has an opening, and the end cover is arranged on the opening. The shell may have one or more openings. The end cover may also be arranged with one or more openings.

For example, the positive electrode has a positive tab, the positive tab is connected to the corresponding adapter 12, and the corresponding adapter 12 is connected to the corresponding conductive terminal, so that electrical conduction between the positive electrode conductive terminal and the positive tab can be achieved.

For example, the negative electrode has a negative tab, the negative tab is connected to the corresponding adapter 12, and the corresponding adapter 12 is connected to the corresponding conductive terminal, so that electrical conduction between the negative electrode conductive terminal and the negative tab can be achieved.

For example, referring to FIG. 1, the frame 1 has a first workstation 1a and a second workstation 1d, where the container 9 at the first workstation 1a carries the adapter 12 for the positive electrode, and the container 9 at the second workstation 1d carries the adapter 12 for the negative electrode.

For example, the container 9 at the first workstation 1a carries the adapter 12 for the positive electrode, and after the adapter 12 in the container 9 carrying the adapter 12 for the positive electrode is transferred, the container 9 carrying the adapter 12 for the negative electrode is transferred to the first workstation 1a.

For example, the container 9 at the second workstation 1d carries the adapter 12 for the negative electrode, and after the adapter 12 in the container 9 carrying the adapter 12 for the negative electrode is transferred, the container 9 carrying the adapter 12 for the positive electrode is transferred to the second workstation 1d.

For example, the material of the adapter 12 for the positive electrode is copper.

For example, the material of the adapter 12 for the negative electrode is aluminum.

The equipment provided in the embodiments of this disclosure is equipped with the positioning disc 3. The gripping assembly 11 can move the adapter 12 for the positive electrode and the adapter 12 for the negative electrode carried by the container 9 at the workstation to the positioning disc 3. The positioning slots 3a of the positioning disc 3 can position the adapters 12, and the transfer apparatus 4 can move the positioned adapter 12 for the positive electrode and adapter 12 for the negative electrode to the corresponding positions. Before the loading of the adapters 12, the positions of the adapters 12 are positioned so that the position of the adapter 12 for the positive electrode relative to the adapter 12 for the negative electrode meets the loading requirements, and after the adapters 12 are loaded and welded to the tabs of the bare cells, the welding marks can be accurately located at the preset positions. This ensures that the battery cells formed after welding are structurally stable and the current flows smoothly, thereby improving the yield of finished batteries.

For example, referring to FIG. 1, the equipment further includes a recovery apparatus 10, where the recovery apparatus 10 is arranged on the frame 1, and the recovery apparatus 10 is used to collect defective adapters 12.

For example, the recovery apparatus 10 is a recovery slot.

For example, the gripping assembly 11 includes an outer frame 110 and a spider hand apparatus 111, the outer frame 110 is arranged on the frame 1, and the spider hand apparatus 111 is arranged on the frame 1. The spider hand apparatus 111 is equipped with a suction cup structure to grip the adapters 12.

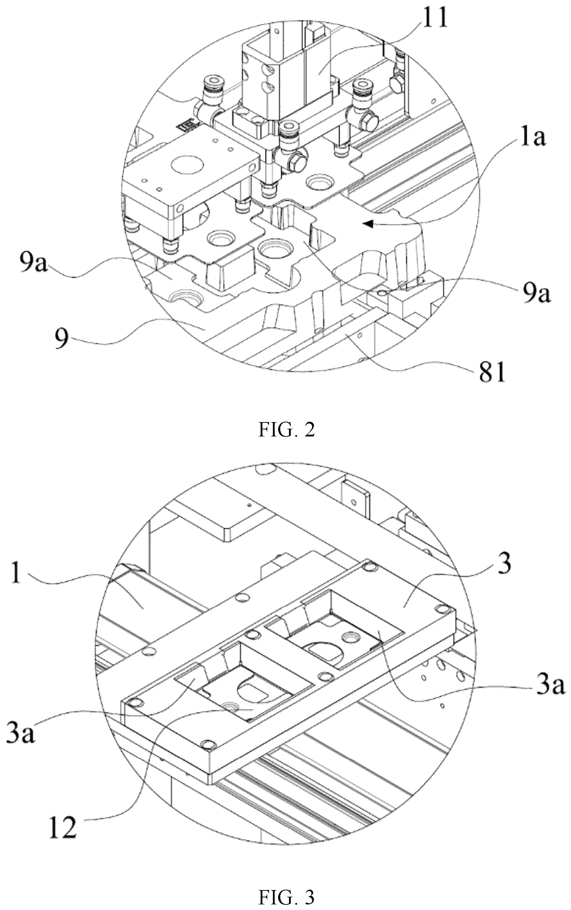

In an embodiment, referring to FIG. 3, the side surface of the positioning slot 3a slopes downward from top to bottom toward the central axis of the positioning slot 3a.

In the embodiments of this disclosure, the side surface of the positioning slot 3a slopes downward from top to bottom toward a central axis of the positioning slot 3a. The side surface of the positioning slot 3a can guide the adapter 12 to move to the bottom surface of the positioning slot 3a, with a simple guiding method and low costs.

It can be understood that this disclosure is not limited to the positioning disc 3 having the positioning slot 3a to position the adapter 12. In an embodiment, the positioning disc 3 includes a positioning assembly and a tray, the positioning assembly and the tray are both arranged on the frame 1, the tray is used to receive the adapters 12 gripped by the gripping assembly 11, the positioning assembly surrounds the tray, and the positioning assembly includes two positioning cylinders arranged in intersecting directions. The positioning cylinders are used to position the adapters 12.

In an embodiment, referring to FIG. 3, the number of positioning slots 3a is two, and the two positioning slots 3a are configured such that the distance between the adapters 12 in the two positioning slots 3a meets the requirement that the positive tab and the negative tab of the bare cell can be welded to the corresponding adapters 12.

In the embodiments of this disclosure, the number of positioning slots 3a is two, and the two positioning slots 3a are configured such that the distance between the adapters 12 in the two positioning slots 3a fits the positive tab and the negative tab of the bare cell. The gripping assembly 11, based on the type of the adapters 12, places the two types of adapters 12 into different positioning slots 3a, the two positioning slots 3a position the paired two types of adapters 12, and the moving apparatus then loads the paired two adapters 12 to the welding assembly. The two types of adapters 12 move synchronously, which can improve production efficiency to a certain extent.

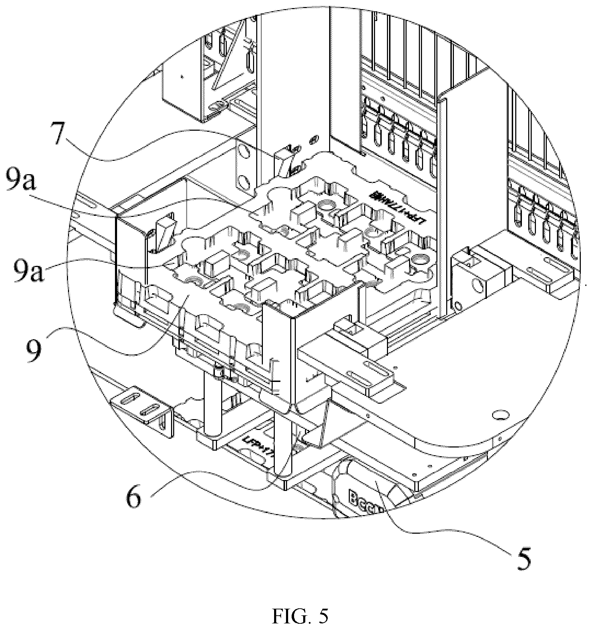

In an embodiment, referring to FIG. 5, the equipment further includes a first transverse movement apparatus 5, a first lifting apparatus 6, and a collection assembly 7, the collection assembly 7 is used to collect the containers 9, the first transverse movement apparatus 5 can move back and forth below the workstation and below the collection assembly 7, and the first lifting apparatus 6 is used to lift the container 9 located below the collection assembly 7 upward, so that the container 9 is placed on the collection assembly 7.

For example, the first transverse movement apparatus 5 is arranged on the frame 1.

For example, the first lifting apparatus 6 is arranged on the first transverse movement apparatus 5.

For example, the first transverse movement apparatus 5 and/or the first lifting apparatus 6 is a cylinder.

In the embodiments of this disclosure, the equipment further includes a first transverse movement apparatus 5, a first lifting apparatus 6, and a collection assembly 7. The first transverse movement apparatus 5 can transfer the target container or the empty container 9 at the workstation to be below the collection assembly 7, and the first lifting apparatus 6 then places the container 9 on the collection assembly 7, so that the container 9 that has not been inspected can be placed at the workstation. The process of replacing the containers 9 is automated, reducing manual intervention, making the loading process smoother.

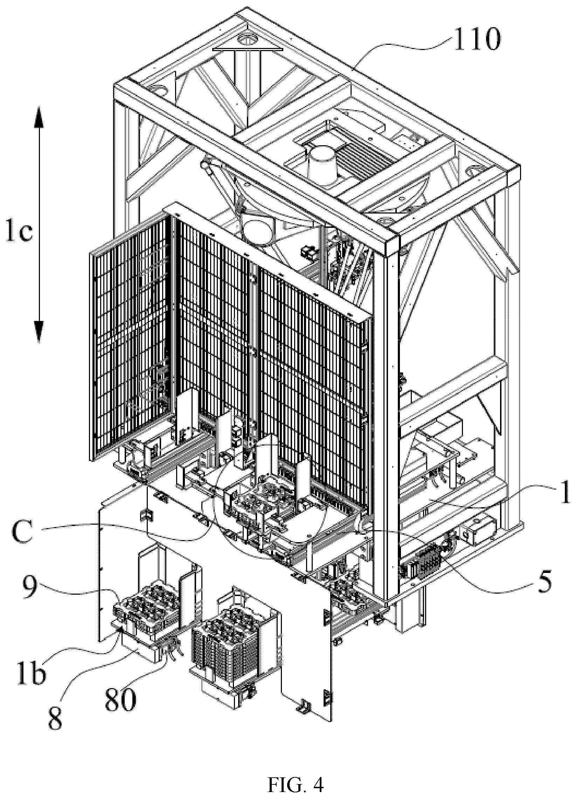

In an embodiment, referring to FIG. 4, the frame 1 has a loading station 1b, the loading station 1b is used for loading the containers 9, the equipment further includes a moving assembly 8, the moving assembly 8 is arranged on the frame 1, and the moving assembly 8 is used to move the containers 9 carrying the adapters 12 from the loading station 1b to the workstation.

It can be understood that the loading station 1b can store multiple containers 9.

In the embodiments of this disclosure, the moving assembly 8 can move the container 9 at the loading station 1b to the workstation. The process of moving the container 9 to the workstation is more automated, making the loading process smooth. Moreover, avoiding manual handling of containers 9 can ensure that the containers 9 are placed more accurately at the workstation.

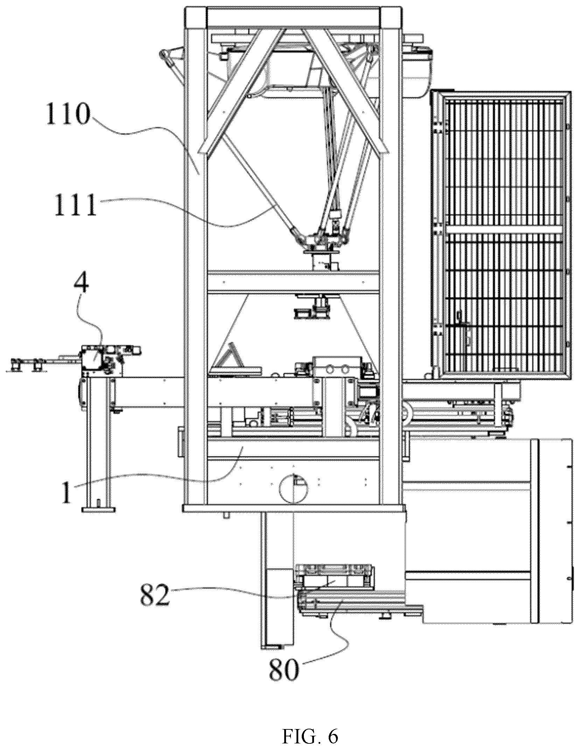

In an embodiment, referring to FIG. 4 and FIG. 6, the moving assembly 8 includes a second transverse movement apparatus 80, a second lifting apparatus 82, and a positioning apparatus 81. The second transverse movement apparatus 80 and the second lifting apparatus 82 are located below the frame 1. The second transverse movement apparatus 80 is used to drive the container 9 from the loading station 1b along the extension direction of the second transverse movement apparatus 80 toward the workstation. The second lifting apparatus 82 is used to drive the container 9 in the vertical direction 1c toward the workstation. The positioning apparatus 81 is arranged on the frame 1, and the positioning apparatus 81 is used to position the container 9 at the workstation.

For example, the second transverse movement apparatus 80 is arranged on the frame 1.

For example, the second lifting apparatus 82 is arranged on the second transverse movement apparatus 80.

For example, the second transverse movement apparatus 80 and/or the second lifting apparatus 82 is a cylinder.

For example, the positioning apparatus 81 is a cylinder, the positioning apparatus 81 can drive spaced stoppers to approach each other to clamp the container 9 at the topmost position at the workstation, and the remaining containers 9 on the second lifting apparatus 82 can move away from the workstation in the vertical direction 1c along with the second lifting apparatus 82.

In the embodiments of this disclosure, the moving assembly 8 includes a second transverse movement apparatus 80, a second lifting apparatus 82, and a positioning apparatus 81. The positioning apparatus 81 can position the container 9 at the workstation accurately, alleviating the situation where the adapters 12 are defective due to deviations in the position of the container 9.

In an embodiment, referring to FIG. 1, the equipment further includes an image acquisition assembly 2 arranged on the frame 1, where the image acquisition assembly 2 is configured to capture the adapter 12 carried by the container 9 at the workstation and send the captured image to a host computer, so that the host computer can inspect the image sent by the image acquisition assembly 2.

For example, the image acquisition assembly 2 may include image acquisition equipment. For example, the image acquisition equipment may be a camera or a video camera.

For example, the container 9 is a blister tray.

For example, the camera may be a CCD (Charge Coupled Device, Charge Coupled Device) camera.

In the embodiments of this disclosure, the equipment is provided with an image acquisition assembly 2 to capture images of the adapters 12 carried by the container 9 at the workstation and send the images to the host computer, so that the host computer can inspect the adapters 12. By inspecting the adapters 12 with the image acquisition assembly 2, defective adapters 12 can be removed from the production line, thereby further improving the qualification rate of finished batteries.

According to a second aspect of this disclosure, a battery production line is provided, including the equipment in any one of the above embodiments and a welding assembly. The welding assembly is used to receive the adapters 12 gripped by the transfer apparatus 4.

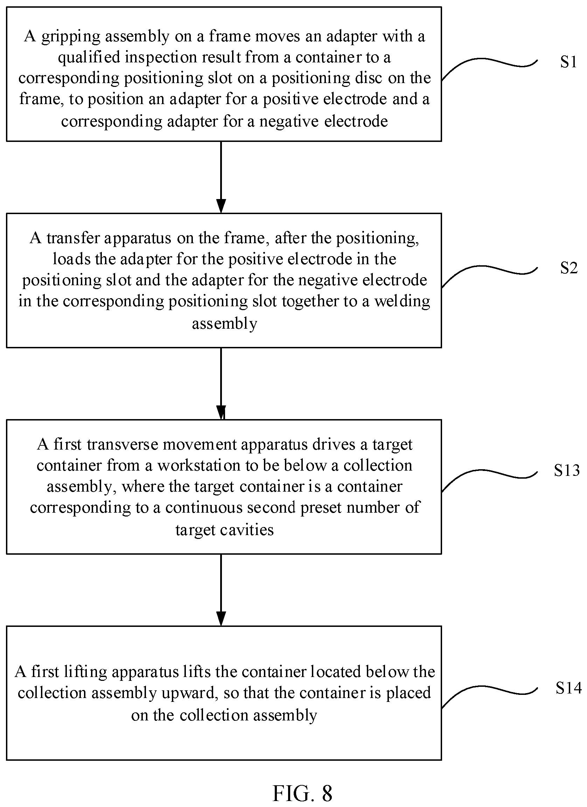

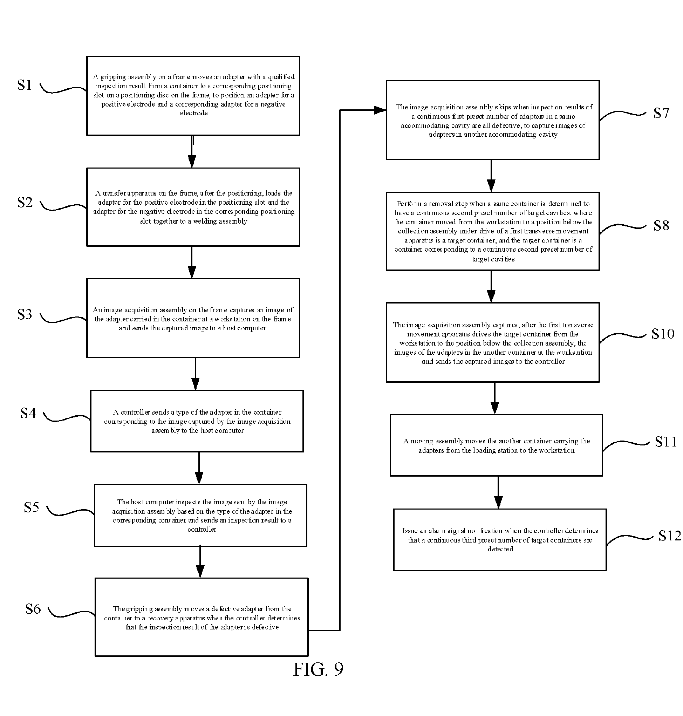

According to a third aspect of this disclosure, a method for loading adapters 12 is provided, referring to FIG. 8 and FIG. 9, including:

Step S1: A gripping assembly on a frame moves an adapter with a qualified inspection result from a container to a corresponding positioning slot on a positioning disc on the frame, to position an adapter for a positive electrode and a corresponding adapter for a negative electrode.

Step S2: A transfer apparatus on the frame, after the positioning, loads the adapter for the positive electrode in the positioning slot and the adapter for the negative electrode in the corresponding positioning slot together to a welding assembly.

The equipment for loading adapters further includes a first transverse movement apparatus, a first lifting apparatus, and a collection assembly. The method further includes a removal step.

For example, the inspection results of the adapters 12 include the color, size, shape, and position accuracy of the adapters 12.

In the embodiments of this disclosure, when the inspection result of the adapter 12 is qualified, the gripping assembly 11 moves the qualified adapter 12 from the container 9 to the positioning disc for positioning. The positioning slots 3a in the positioning disc 3 can position the adapter 12 for the positive electrode and the adapter 12 for the negative electrode, ensuring that the position of the adapter 12 for the positive electrode relative to the adapter 12 for the negative electrode meets the loading requirements. After the adapters 12 are loaded and welded to the tabs of the bare cells, the welding marks can be accurately located at the preset positions. This ensures that the battery cells formed after welding are structurally stable and the current flows smoothly, thereby improving the yield of finished batteries.

In an embodiment, referring to FIG. 9, the adapters 12 are imaged by an image acquisition assembly 2, and defective adapters 12 are collected by a recovery apparatus 10; and the method further includes:

Step S3: The image acquisition assembly on the frame captures an image of the adapter carried in the container at the workstation on the frame and sends the captured image to a host computer.

Step S4: A controller sends a type of the adapter in the container corresponding to the image captured by the image acquisition assembly to the host computer.

Step S5: The host computer inspects the image sent by the image acquisition assembly based on the type of the adapter in the corresponding container and sends an inspection result to the controller.

Step S6: The gripping assembly moves the defective adapter from the container to the recovery apparatus when the controller determines that the inspection result of the adapter is defective.

The types of the adapters 12 include adapters 12 for the positive electrode and adapters 12 for the negative electrode.

In the embodiments of this disclosure, the image acquisition assembly 2 on the frame 1 captures the image of the adapter 12 carried by the container 9 at the workstation and sends the image to the host computer, and the host computer inspects the adapter 12. The host computer compares the image 2 sent by the image acquisition assembly 2 based on the type of the adapter 12, and can move the defective adapter 12 to the recovery apparatus 10, thereby further improving the qualification rate of finished batteries.

In an embodiment, referring to FIG. 9, the container 9 has multiple accommodating cavities 9a for carrying adapters 12; and the method further includes:

Step S7: The image acquisition assembly skips when inspection results of a continuous first preset number of adapters in a same accommodating cavity are all defective, to capture images of adapters in another accommodating cavity.

It should be noted that the embodiments of this disclosure do not limit the first preset number, and the first preset number may be set according to the actual needs of the operator.

For example, the first preset number is 3.

For example, when the image acquisition assembly 2 performs a skipping action, the image acquisition assembly 2 captures images of the adapters 12 in another accommodating cavity 9a that have not yet been imaged.

In the embodiments of this disclosure, when the inspection results of multiple continuous adapters 12 in the same accommodating cavity 9a are defective, the image acquisition assembly 2 captures images of the adapters 12 in another accommodating cavity 9a. During the process of placing the adapters 12 in the accommodating cavity 9a, due to human or mechanical issues causing position deviations or mix-ups of the adapters 12, errors may occur in all adapters 12 in the accommodating cavity 9a. When multiple continuous defective adapters 12 are detected, skipping that accommodating cavity 9a can speed up the loading process and avoid spending too much time inspecting defective adapters 12.

In an embodiment, the removal step includes:

Step S13: The first transverse movement apparatus drives the target container from the workstation to be below the collection assembly, where the target container is the container corresponding to the continuous second preset number of target cavities.

Step S14: The first lifting apparatus lifts the container located below the collection assembly upward, so that the container is placed on the collection assembly.

In an embodiment, referring to FIG. 9, an equipment for loading adapters 12 further includes a first transverse movement apparatus 5, a first lifting apparatus 6, and a collection assembly 7, and the accommodating cavity 9a corresponding to the continuous first preset number of adapters 12 with defective inspection results in the same accommodating cavity 9a is a target cavity; and the method further includes:

Step S8: Perform the removal step when a same container is determined to have a continuous second preset number of target cavities, where the container moved from the workstation to the position below the collection assembly under the drive of the first transverse movement apparatus is a target container, and the target container is the container corresponding to the continuous second preset number of target cavities.

Step S10: The image acquisition assembly captures, after the first transverse movement apparatus drives the target container from the workstation to the position below the collection assembly, images of adapters in another container at the workstation and sends the captured images to the controller.

It should be noted that the embodiments of this disclosure do not limit the second preset number, and the second preset number may be set according to the actual needs of the operator.

For example, the second preset number is 3.

In the embodiments of this disclosure, when it is determined that the same container 9 continuously inspects the second preset number of target cavities, the target container is transferred out of the workstation, and the target container is moved to the collection assembly 7 by the first transverse movement apparatus 5 and the first lifting apparatus 6. When a container 9 continuously has multiple target cavities, it is possible that one adapter 12 is placed incorrectly in the process of placing the adapters 12 in the container 9, resulting in subsequent adapters 12 being incorrect. When multiple continuous target cavities are detected, skipping that container 9 can speed up the loading process and avoid spending too much time inspecting defective adapters 12.

In an embodiment, referring to FIG. 9, the container 9 is moved from a loading station 1b of the frame 1 to the workstation of the frame 1 by a moving assembly 8. After the first transverse movement apparatus 5 drives the target container from the workstation to the position below the collection assembly 7, the method further includes:

Step S11: The moving assembly moves the another container carrying the adapters from the loading station to the workstation.

In the embodiments of this disclosure, after the target container is transferred out of the workstation, the moving assembly 8 can move another container 9 to the workstation, so that the image acquisition assembly can continue to capture images. The automation level of the moving process is high, alleviating the need for manual movement of the container 9.

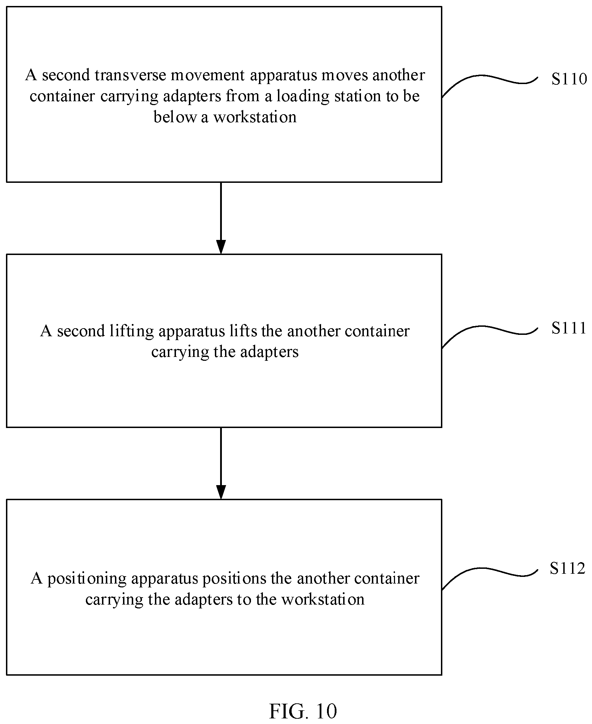

For example, referring to FIG. 10, the moving assembly 8 includes a second transverse movement apparatus 80, a second lifting apparatus 82, and a positioning apparatus 81. The step that the moving assembly 8 moves the another container 9 carrying the adapters 12 from the loading station 1b to the workstation includes:

Step S110: The second transverse movement apparatus moves another container carrying the adapters from the loading station to be below the workstation.

Step S111: The second lifting apparatus lifts the another container carrying the adapters.

Step S112: The positioning apparatus positions the another container carrying the adapters to the workstation.

It can be understood that this disclosure is not limited to moving another container 9 carrying the adapters 12 from the loading station 1b to the workstation by the moving assembly 8. In an embodiment, another container 9 may be manually loaded to the workstation.

In an embodiment, referring to FIG. 9, the container 9 corresponding to the continuous second preset number of target cavities in the same container is the target container 9; and the method further includes:

Step S12: Issue an alarm signal notification when the controller determines that a continuous third preset number of target containers are detected.

It should be noted that the embodiments of this disclosure do not limit the third preset number, and the third preset number may be set according to the actual needs of the operator.

For example, the third preset number is 2.

In the embodiments of this disclosure, an alarm is triggered when multiple target containers are detected continuously. When multiple target containers are detected continuously, significant faults may occur, requiring an alarm to notify the operators to troubleshoot each stage of the loading process to resolve the issue and continue loading.

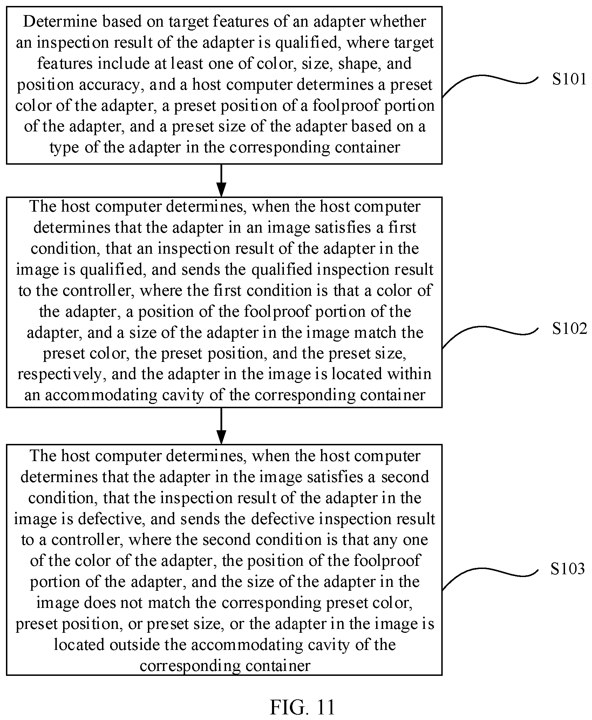

In an embodiment, referring to FIG. 11, the adapter 12 carried by the container 9 at the workstation is inspected. The host computer inspects, based on the type of the adapter 12 in the corresponding container 9, the image sent by the image acquisition assembly 2, and sends the inspection result to the controller, including the following steps:

Step S101: Determine based on target features of the adapter whether the inspection result of the adapter is qualified, where the target features include at least one of color, size, shape, and position accuracy, and the host computer determines a preset color of the adapter, a preset position of a foolproof portion of the adapter, and a preset size of the adapter based on the type of the adapter in the corresponding container.

Step S102: The host computer determines, when the host computer determines that the adapter in the image satisfies a first condition, that the inspection result of the adapter in the image is qualified, and sends the qualified inspection result to the controller, where the first condition is that a color of the adapter, a position of the foolproof portion of the adapter, and a size of the adapter in the image match the preset color, the preset position, and the preset size, respectively, and the adapter in the image is located within an accommodating cavity of the corresponding container.

Step S103: The host computer determines, when the host computer determines that the adapter in the image satisfies a second condition, that the inspection result of the adapter in the image is defective, and sends the defective inspection result to the controller, where the second condition is that any one of the color of the adapter, the position of the foolproof portion of the adapter, and the size of the adapter in the image does not match the corresponding preset color, preset position, or preset size, or the adapter in the image is located outside the accommodating cavity of the corresponding container.

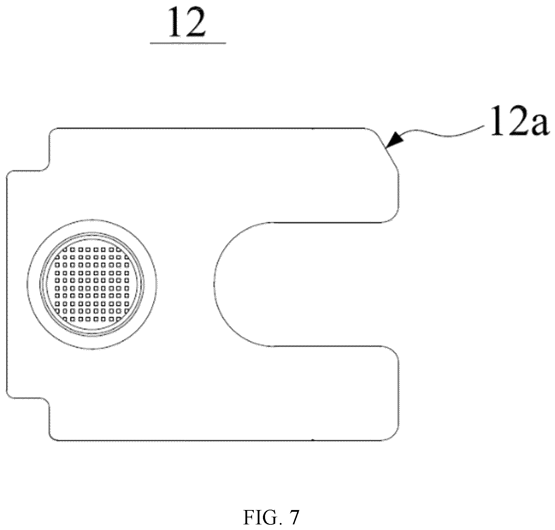

For example, the foolproof portion 12a of the adapter 12 for the positive electrode is shown in FIG. 7.

It can be understood that the materials of the adapters 12 for the positive electrode and the adapters 12 for the negative electrode are different, and the colors of different materials are also basically different, so the preset colors of various types of adapters 12 are also different.

It can be understood that to distinguish different types of adapters 12, the preset positions of the foolproof portions 12a of various types of adapter 12 are also different.

It can be understood that there may be certain dimensional errors in the production process of the adapters 12, and setting a preset size can exclude adapters 12 with large dimensional errors, thereby increasing the yield of finished batteries.

In the embodiments of this disclosure, the color, position of the foolproof portion 12a, and size of the adapter 12 are compared with the preset color, preset position, and preset size respectively, ensuring that the inspected adapters 12 meet the operator's requirements for preset features, thereby increasing the yield of finished batteries.

The above are merely preferred embodiments of this disclosure and are not intended to limit this disclosure. For those skilled in the art, this disclosure may have various modifications and changes. Any modifications, equivalent replacements, improvements, or the like, made within the spirit and principles of this disclosure should be included within the protection scope of this disclosure.

## Claims

1. An equipment for loading adapters, comprising:
a frame having multiple workstations, wherein a container at one or more of the workstations carries an adapter for a positive electrode, and a container at one or more of the workstations carries an adapter for a negative electrode;
a gripping assembly arranged on the frame;
a positioning disc arranged on the frame, wherein the positioning disc has multiple positioning slots, and among the multiple positioning slots, a pair of two positioning slots respectively position the adapter for the positive electrode and the adapter for the negative electrode, and the gripping assembly is configured to grip an adapter carried by the container at the workstation and move the adapter to a corresponding positioning slot, so that a position of the adapter for the positive electrode relative to the adapter for the negative electrode meets loading requirements; and
a transfer apparatus arranged on the frame, wherein the transfer apparatus is configured to pick up the adapter for the positive electrode in the positioning slot and the adapter for the negative electrode in the corresponding positioning slot together and load the adapters to a welding assembly;
wherein the equipment further comprises a first transverse movement apparatus, a first lifting apparatus, and a collection assembly, the collection assembly is configured to collect the containers, the first transverse movement apparatus is capable of moving back and forth below the workstation and below the collection assembly, and the first lifting apparatus is configured to lift the container located below the collection assembly upward, so that the container is placed on the collection assembly.

2. The equipment according to claim **1,** wherein a side surface of the positioning slot slopes downward from top to bottom toward a central axis of the positioning slot.

3. The equipment according to claim 1 or 2, wherein the frame has a loading station, the loading station is configured for loading the containers, and the equipment further comprises a moving assembly, the moving assembly being arranged on the frame, wherein the moving assembly is configured to move the container carrying the adapter from the loading station to the workstation.

4. The equipment according to claim 3, wherein the moving assembly comprises a second transverse movement apparatus, a second lifting apparatus, and a positioning apparatus, the second transverse movement apparatus and the second lifting apparatus are located below the frame, the second transverse movement apparatus is configured to drive the container to move from the loading station along an extension direction of the second transverse movement apparatus toward the workstation, the second lifting apparatus is configured to drive the container to move closer to the workstation in a vertical direction, the positioning apparatus is arranged on the frame, and the positioning apparatus is configured to position the container at the workstation.

5. The equipment according to claim 4, wherein the second transverse movement apparatus is arranged on the frame, and the second lifting apparatus is arranged on the second transverse movement apparatus.

6. The equipment according to claim 4 or 5, wherein the second transverse movement apparatus and/or the second lifting apparatus is a cylinder.

7. The equipment according to any one of claims 1 to 6, wherein the equipment further comprises an image acquisition assembly arranged on the frame, wherein the image acquisition assembly is configured to capture the adapter carried by the container at the workstation and send the captured image to a host computer, so that the host computer inspects the image sent by the image acquisition assembly.

8. The equipment according to any one of claims 1 to 7, wherein the equipment further comprises a recovery apparatus, the recovery apparatus being arranged on the frame, wherein the recovery apparatus is configured to collect defective adapters.

9. The equipment according to claim 8, wherein the recovery apparatus is a recovery slot.

10. The equipment according to any one of claims 1 to 9, wherein the first transverse movement apparatus is arranged on the frame, and the first lifting apparatus is arranged on the first transverse movement apparatus.

11. The equipment according to any one of claims 1 to 10, wherein the first transverse movement apparatus and/or the first lifting apparatus is a cylinder.

12. A battery production line, comprising:
the equipment according to any one of claims 1 to 11; and
a welding assembly configured to receive the adapters gripped by the transfer apparatus.

13. A method for loading adapters, comprising:
moving, by a gripping assembly on a frame, an adapter with a qualified inspection result from a container to a corresponding positioning slot on a positioning disc on the frame, to position an adapter for a positive electrode and a corresponding adapter for a negative electrode;
loading, after the positioning, by a transfer apparatus on the frame, the adapter for the positive electrode in the positioning slot and the adapter for the negative electrode in the corresponding positioning slot together to a welding assembly; and
removing, by a first transverse movement apparatus, a first lifting apparatus, and a collection assembly, the container at a workstation from the workstation, wherein the method further comprises a removal step, and the removal step comprises:
driving, by the first transverse movement apparatus, the container to move from the workstation to a position below the collection assembly; and
lifting, by the first lifting apparatus, the container located below the collection assembly upward, so that the container is placed on the collection assembly.

14. The method according to claim 13, wherein the adapters are imaged by an image acquisition assembly, and defective adapters are collected by a recovery apparatus; and the method further comprises:
capturing, by the image acquisition assembly on the frame, an image of the adapter carried in the container at the workstation on the frame and sending the captured image to a host computer;
sending, by a controller, a type of the adapter in the container corresponding to the image captured by the image acquisition assembly to the host computer;
inspecting, by the host computer, the image sent by the image acquisition assembly based on the type of the adapter in the corresponding container and sending an inspection result to the controller; and
moving, when the controller determines that the inspection result of the adapter is defective, by the gripping assembly, the defective adapter from the container to the recovery apparatus.

15. The method according to claim 14, wherein the container has multiple accommodating cavities for carrying adapters; and the method further comprises:
skipping, when inspection results of a continuous first preset number of adapters in a same accommodating cavity are all defective, by the image acquisition assembly, to capture images of adapters in another accommodating cavity.

16. The method according to claim 15, wherein an equipment for loading adapters comprises a first transverse movement apparatus, a first lifting apparatus, and a collection assembly, and the accommodating cavity corresponding to the continuous first preset number of adapters with defective inspection results in the same accommodating cavity is a target cavity; and the method further comprises:
performing, when a same container is determined to have a continuous second preset number of target cavities, the removal step, wherein the container moved from the workstation to the position below the collection assembly under the drive of the first transverse movement apparatus is a target container, and the target container is the container corresponding to the continuous second preset number of target cavities; and
capturing, after the first transverse movement apparatus drives the target container from the workstation to the position below the collection assembly, by the image acquisition assembly, images of adapters in another container at the workstation and sending the captured images to the controller.

17. The method according to any one of claims 13 to 16, wherein the container is moved from a loading station of the frame to the workstation of the frame by a moving assembly; and
after the first transverse movement apparatus drives the target container from the workstation to the position below the collection assembly, the method further comprises:
moving, by the moving assembly, the another container carrying the adapters from the loading station to the workstation.

18. The method according to claim 16, wherein the container corresponding to the continuous second preset number of target cavities in the same container is the target container; and the method further comprises:
issuing, when the controller determines that a continuous third preset number of target containers are detected, an alarm signal notification.

19. The method according to claim 18, wherein the first preset number and the second preset number are both 3, and the third preset number is 2.

20. The method according to any one of claims 14 to 16, 18, or 19, wherein the inspecting, by the host computer, the image sent by the image acquisition assembly based on the type of the adapter in the corresponding container and sending an inspection result to the controller comprises:
determining, by the host computer, a preset color of the adapter, a preset position of a foolproof portion of the adapter, and a preset size of the adapter based on the type of the adapter in the corresponding container; and
determining, when the host computer determines that the adapter in the image satisfies a first condition, by the host computer, that the inspection result of the adapter in the image is qualified, and sending the qualified inspection result to the controller, wherein the first condition is that a color of the adapter, a position of the foolproof portion of the adapter, and a size of the adapter in the image match the preset color, the preset position, and the preset size, respectively, and the adapter in the image is located within an accommodating cavity of the corresponding container; and
determining, when the host computer determines that the adapter in the image satisfies a second condition, by the host computer, that the inspection result of the adapter in the image is defective, and sending the defective inspection result to the controller, wherein the second condition is that any one of the color of the adapter, the position of the foolproof portion of the adapter, and the size of the adapter in the image does not match the corresponding preset color, preset position, or preset size, or the adapter in the image is located outside the accommodating cavity of the corresponding container.
